# FASCICULE DE BREVET EUROPEEN

(11) **EP 3 894 117 B1**
(45) Date de publication et mention de la délivrance du brevet: **07.08.2024**
(21) Numéro de dépôt: 19839400.9
(22) Date de dépôt: 12.12.2019
(51) Int. Cl.: B22F 10/28, B22F 10/322, B22F 12/00, B22F 12/30, B22F 12/70, B29C 64/153, B29C 64/25, B29C 64/371, B33Y 30/00, B33Y 50/02

(54) **CHAMBRE DE FABRICATION POUR UNE MACHINE DE FABRICATION ADDITIVE**
FERTIGUNGSKAMMER FÜR EINE VORRICHTUNG ZUR GENERATIVEN HERSTELLUNG
MANUFACTURING CHAMBER FOR AN ADDITIVE MANUFACTURING MACHINE

(30) Priorité: 12.12.2018 FR 1872769
(43) Date de publication de la demande: 20.10.2021
(73) Titulaire: AddUp, 63118 Cébazat (FR)
(72) Inventeur: FRAGNIERE, Bruno, 63040 Clermont Ferrand Cedex 9 (FR); EFFERNELLI, Albin, 63118 Cébazat (FR); WALRAND, Gilles, 63118 Cébazat (FR)
(74) Mandataire: Barascou, Frédéric
(86) Numéro de dépôt international: PCT/FR2019/053045
(87) Numéro de publication internationale: WO 2020/120912

(56) Documents cités:
- EP-A1- 3 840 939
- WO-A1-2015/189619
- JP-A- 2014 104 489
- US-A- 2 052 869

## Description

### DOMAINE DE L'INVENTION ET ETAT DE LA TECHNIQUE

La présente invention concerne le domaine général de la fabrication additive sélective.

Plus particulièrement, elle concerne une chambre de fabrication pour une machine de fabrication additive.

La fabrication additive sélective consiste à réaliser des objets tridimensionnels par consolidation de zones sélectionnées sur des strates successives de matériau pulvérulent (poudre métallique, poudre de céramique, etc.). Les zones consolidées correspondent à des sections successives de l'objet tridimensionnel. La consolidation se fait par exemple couche par couche, par une fusion sélective totale ou partielle réalisée avec une source de consolidation (faisceau laser de forte puissance, faisceau d'électrons, etc.).

Classiquement, un appareil de fabrication additive comporte dans une chambre de fabrication fixe :
- un plateau mobile verticalement sur lequel sont déposées successivement les différentes couches de poudre de fabrication additive,
- une ou plusieurs sources de faisceaux d'énergie commandées pour balayer sélectivement le lit de poudre,
- un réservoir d'alimentation de poudre,
- un outil, tel qu'une raclette ou un rouleau, qui se déplace en translation sur le lit de poudre pour étaler la poudre.

Classiquement, on prévoit au-dessus du plateau mobile un flux de gaz inerte destiné à évacuer les fumées et projections résultant de la fusion des poudres. Ce flux de gaz inerte évite que les fumées et les projections ne perturbent le faisceau d'énergie. Ce flux contribue en outre à empêcher que ces fumées et projections salissent ou

obstruent la vitre par laquelle le faisceau d'énergie pénètre dans la chambre de fabrication.

Le document JP 2014104489 A décrit une chambre d'un appareil de traitement au laser, comprenant une unité de collecte de la poussière permettant de recueillir les poussières produites par l'irradiation du faisceau laser sur un objet traité.

Le document WO 2015/189619 A1 décrit une chambre de fabrication additive comprenant un dispositif d'écoulement comprenant un corps ayant une surface Coanda et un passage pouvant être relié à une source de gaz sous pression.

Par ailleurs, le document EP 3 840 939 décrit une chambre de fabrication additive comprenant une ouverture pour une injection de gaz dans une partie basse de la chambre.

Les configurations proposées à ce jour pour de tels mécanismes d'évacuation de fumée ne sont néanmoins pas pleinement satisfaisantes.

### PRESENTATION GENERALE DE L'INVENTION

Un but de l'invention est de palier les inconvénients des chambres de fabrication additive connues dans l'état de la technique, en particulier pour les plateaux de grande taille.

Notamment, l'invention propose une solution permettant l'évacuation des fumées et projections résultant de la fusion des poudres, tout en perturbant le moins possible la poudre déposée en couches.

Ainsi, l'invention propose une chambre de fabrication pour une machine de fabrication additive selon la revendication 1.

Une telle configuration permet de s'assurer que le gaz inerte circule au-dessus du plateau de fabrication et du plan de travail selon un écoulement laminaire.

On assure ainsi l'évacuation des vapeurs de métal et des éventuelles projections par un flux rasant qui ne présente pas de turbulences et qui par conséquent évite de souffler les poudres en place.

Une telle configuration est en outre avantageusement complétée par les différentes caractéristiques suivantes prises seules ou selon toutes leurs combinaisons techniquement possibles :
- l'ouverture d'entrée dirige le flux de gaz tangentiellement à la rampe amont ;
- l'ouverture d'entrée est une fente qui s'étend selon une direction principale perpendiculaire à la direction de circulation du flux de gaz ;
- la fente de l'ouverture d'entrée s'étend sur au moins la largeur du plateau de fabrication à l'intérieur de l'enceinte;
- la surface à profil convexe arrondi présente un rayon de courbure constant ;
- une portion de l'ouverture d'entrée comprend un dégagement agencé dans la paroi latérale de l'enceinte ;
- la surface à profil convexe arrondi présente un rayon de courbure compris entre 300 mm et 1700 mm, par exemple égal à 1500 mm ;
- la surface à profil convexe arrondi présente différents rayons de courbure ou un rayon de courbure variable et dont les variations suivent une fonction déterminée ;
- la rampe amont est inclinée par rapport au plan du plateau d'un angle compris entre 15° et 25°, par exemple égal à 20°;
-
- en aval du plateau de fabrication, la surface du plan de travail est parallèle à la surface du plateau de fabrication jusqu'à l'ouverture de sortie ;
- l'ouverture de sortie est configurée pour aspirer le flux de gaz tangentiellement à ladite rampe aval.

L'invention concerne en outre une machine de fabrication additive comprenant une chambre de fabrication du type précité.

### DESCRIPTION DES FIGURES

D'autres caractéristiques et avantages de l'invention ressortiront encore de la description qui suit, laquelle est purement illustrative et non-limitative, et doit être lue en regard des figures annexées sur lesquelles :
- la figure 1 est une représentation schématique d'une machine de fabrication additive selon l'invention ;
- la figure 2 est une représentation schématique d'une chambre de fabrication selon un mode de réalisation de l'invention ;
- la figure 3 est une vue en coupe transversale d'une chambre de fabrication conforme au mode de réalisation de la figure 2 ;
- la figure 4 est une représentation schématique d'une chambre de fabrication conforme à un autre mode de réalisation de l'invention ;
- la figure 5 est un graphe sur lequel on a porté les vitesses d'écoulement du flux de gaz dans une chambre de fabrication du type de celle de la figure 2.

### DESCRIPTION DETAILLEE DE L'INVENTION

### Disposition générale

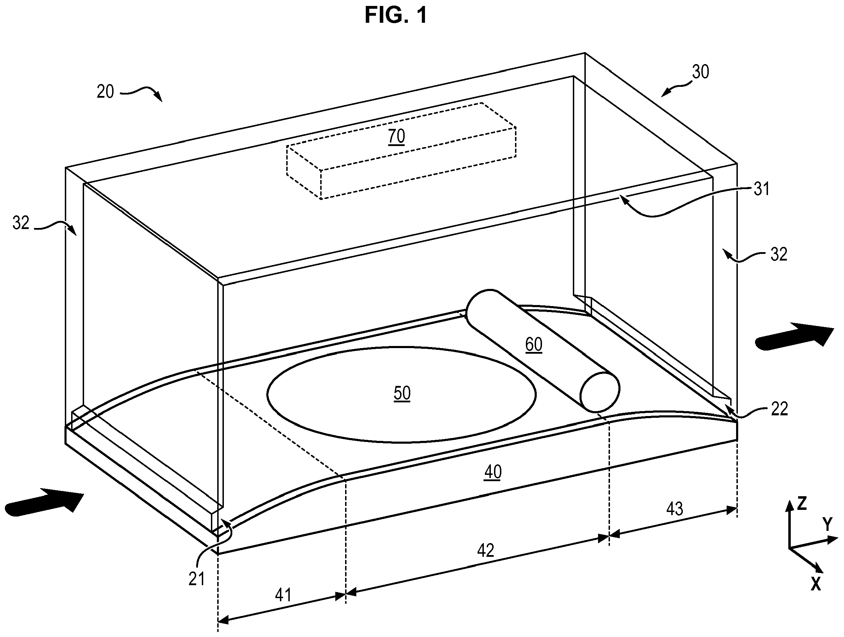

En référence à la **figure 1****,** la machine 10 de fabrication additive comprend une chambre de fabrication 20.

D'une manière classique, la chambre de fabrication 20 comprend une enceinte 30 définie par un plan de travail 40, des parois latérales 32 qui entourent ledit plan de travail 40 et un capot 31 supérieur qui ferme l'enceinte 30 tout en permettant le passage du faisceau d'énergie. Les parois 32 et le capot 31 sont par exemple métalliques. Le plan de travail 40 est, par exemple, en métal.

La chambre de fabrication 20 comporte également un plateau 50 de fabrication destiné à recevoir les différentes couches de poudre de fabrication additive successives et à soutenir une pièce lors de sa fabrication.

Ce plateau 50 présente une surface de travail avec des caractéristiques de planéité et d'état de surface adaptées à la fabrication additive. De plus, le plateau 50 présente préférentiellement des caractéristiques de résistance mécanique permettant de soutenir une pièce de plusieurs dizaines voire centaines de kilogrammes. Ainsi, le plateau 50 peut par exemple être réalisé en métal.

Ce plateau 50 est situé au niveau d'une zone centrale 42 du plan de travail 40, ladite zone centrale 42 comportant une surface plane.

Typiquement, cette zone centrale 42 peut être d'une longueur de plus d'un mètre (environ 1300 millimètres par exemple).

Le plan de dépôt et de fusion de la poudre est confondu avec le plan de cette zone centrale 42 tout au long du processus.

A cet effet, le plateau 50 se déplace en translation relativement au plan de travail 40 au fur et à mesure du dépôt et de la fusion des couches de poudre.

Notamment, dans un mode de réalisation, le plateau 50 descend au fur et à mesure du dépôt et de la fusion des couches de poudre, tandis que le plan de travail 40 reste fixe.

En variante, il peut être prévu que c'est le plan de travail 40 qui se déplace avec l'enceinte 30 tandis que le plateau 50 reste fixe.

Le plateau 50 de fabrication peut être de forme circulaire, rectangulaire, carré, triangulaire, etc. Dans le cas d'une forme circulaire, son diamètre est de par exemple environ 1200 millimètres.

En outre, la chambre de fabrication 20 comprend un chariot 60 se déplaçant au-dessus du plan de travail 40 et du plateau 50.

De la poudre est emmenée ou déposée devant le chariot 60 par un dispositif de distribution de poudre qui peut être un tiroir ou un injecteur, ou un réservoir de poudre disposé au-dessus du plan de travail 40. Ensuite, le chariot 60 permet de répartir, sur une zone de fabrication 51, la poudre sur le plateau 50, ou sur une couche précédente de poudre, en vue de la fabrication d'une pièce.

Le chariot 60 peut, par exemple, comprendre une raclette ou un rouleau.

Par ailleurs, la chambre de fabrication 20 comprend un organe d'apport de puissance 70 permettant de fondre une poudre de fabrication additive. L'organe d'apport de puissance 70 peut, par exemple, être une source de faisceau laser, de faisceau d'électrons, etc.

### Entrée de gaz/ Sortie de gaz

Pour la suite de la présente description, il est fait référence à un repère orthonormé XYZ. Le plan XY est parallèle à la surface de la zone centrale 42 du plan de travail 40, l'axe X constituant un axe transversal, l'axe Y constituant un axe longitudinal parallèle à la longueur du plan de travail 40, et l'axe Z étant un axe vertical.

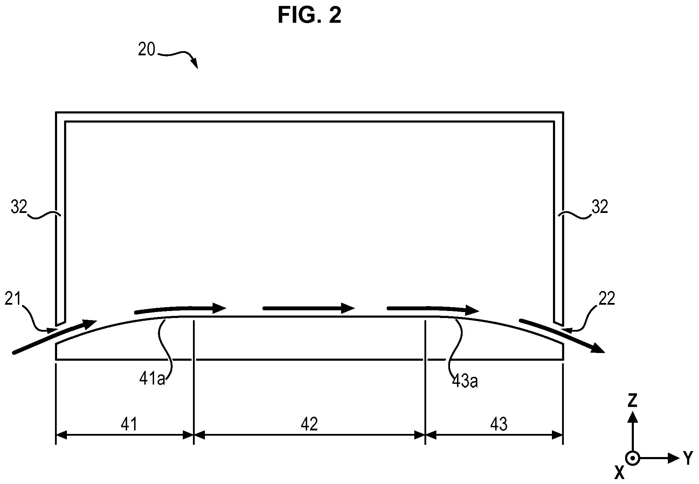

Ainsi que l'illustre **la** **figure 2****,** un gaz, de préférence inerte, circule au-dessus de la zone 42, parallèlement à l'axe Y.

L'enceinte 30 comporte à cet effet une entrée et une sortie de gaz 21, 22. Un circuit (non représenté) et divers équipements sont également prévus à l'extérieur de l'enceinte 30 pour assurer la circulation du gaz (conduits, pompe de circulation, filtre, par exemple).

Le gaz inerte est par exemple un gaz à base d'azote, un gaz noble (hélium, néon, argon, krypton, xénon ou radon), ou encore un mélange de certains de ces gaz.

L'entrée 21 et la sortie 22 sont par exemple des ouvertures (notamment, des fentes parallèles à l'axe X) ménagées à travers les parois 32, au voisinage du plan de travail 40.

Elles peuvent également être ménagées à travers le plan de travail 40 et déboucher à l'intérieur de l'enceinte 30 au voisinage immédiat des parois 32.

Elles s'étendent avantageusement sur au moins la largeur transversale du plateau 50 à l'intérieur de l'enceinte 30, et de préférence sur plus de la largeur transversale du plateau 50.

Un tel ratio permet de couvrir au mieux toute la surface du plateau 50 et ainsi d'évacuer de façon optimale les fumées et projections issues de la fusion des poudres.

Notamment, la géométrie de la ou des ouvertures qui constitue(nt) l'entrée 21 est telle que le flux de gaz est injecté dans l'enceinte sous la forme d'un écoulement laminaire.

Le chariot 60 peut être positionné perpendiculairement au flux ou suivant une autre orientation. Lorsque le chariot 60 est positionné perpendiculairement au flux comme le montre la figure 1, il peut être prévu une position de repli du chariot le long d'une paroi latérale 32 de l'enceinte. Dans une telle position de repli, le chariot se situe au-dessus de l'entrée 21 ou de la sortie 22 et ne perturbe pas le flux.

Pour éviter de perturber le flux, le chariot 60 peut aussi être positionné parallèlement au flux.

Le plateau de travail 40 comporte, en amont de la zone centrale 42, une rampe amont 41 au voisinage immédiat de laquelle débouche l'entrée 21 du gaz inerte.

Dans tout le présent texte, les termes amont et aval sont définis en référence à la direction d'écoulement du flux de gaz.

L'entrée 21 est d'une géométrie qui dirige le flux de gaz sur la rampe amont 41, de préférence, tangentiellement à celle-ci.

En variante, l'entrée 21 est d'une géométrie qui dirige le flux de gaz sur la rampe amont 41 avec un angle d'incidence.

A son extrémité opposée à l'ouverture 21, la rampe amont 41 se termine par une zone de raccordement 41a, qui est de géométrie convexe arrondie et qui fait la jonction avec la surface de la zone centrale 42.

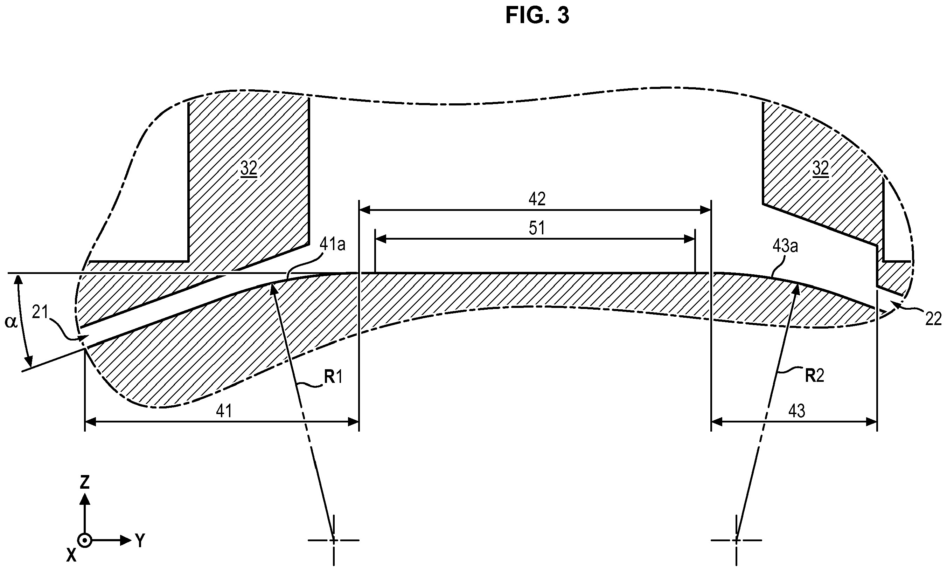

Dans le mode de réalisation illustré sur **la** **figure 3****,** la rampe amont 41 du plan de travail 40 est inclinée par rapport au plan XY d'un angle α compris entre 10° et 25°, par exemple compris entre 15° et 25°. L'angle α est par exemple égal à 20°.

Le rayon de courbure R1 de la zone de raccordement arrondie 41a peut être compris entre 300 mm et 1700 mm. Il est préférentiellement compris entre 1400 mm et 1600 mm et est par exemple égal à 1500 mm.

La zone de raccordement arrondie 41 a peut aussi présenter différents rayons de courbure ou un rayon de courbure variable et dont les variations suivent une fonction déterminée.

Avec une telle configuration de la rampe d'entrée et de la zone de raccordement arrondie, le flux de gaz envoyé le long de la rampe amont 41 par l'entrée 21 subit un effet Coanda.

L'effet Coanda est amélioré lorsque l'entrée 21 dirige le flux de gaz tangentiellement sur la rampe amont 41.

On rappelle que l'effet Coanda est l'attraction d'un jet de fluide par une surface convexe sur laquelle il s'écoule. Un tel effet est décrit par exemple dans le document de brevet US 2 052 869.

Du fait de la forme convexe arrondie de la zone de raccordement arrondie 41 a, le flux de gaz est attiré et plaqué le long de la zone 42, dans la direction de l'axe Y.

Ceci permet de garder un flux laminaire et uniforme au-dessus de la zone centrale 42, notamment lorsque le plateau 50 et le plan de travail 40 ont des longueurs et des largeurs importantes supérieures à 400 mm.

Du fait de l'absence de turbulence, les poudres en place ne sont pas soufflées, tandis que les vapeurs et les impuretés mises en suspension par la fusion métallique sont emportées par le flux de gaz.

Comme l'illustrent les figures 2 et 3, une rampe aval 43 inclinée par rapport au plan horizontal XY est présente en aval de la zone 42.

L'angle d'inclinaison de ladite rampe aval 43 peut, en valeur absolu, être identique à l'angle d'inclinaison α de la rampe amont 41. Il peut également en être différent.

Cet angle d'inclinaison est par exemple compris entre 10° et 90°, préférentiellement entre 15° et 25° et est par exemple égal à 20°.

Également, la zone centrale 42 et la rampe aval 43 du plan de travail 40 sont reliées par une zone de raccordement arrondie 43a, dont le rayon de courbure R2 peut être constant ou variable, et compris entre 300 mm et 1700 mm, préférentiellement compris entre 1400 mm et 1600 mm, et est par exemple égal à 1500 mm.

La zone de raccordement arrondie 43a reliant la zone centrale 42 et la rampe aval 43 du plan de travail 40 peut aussi présenter différents rayons de courbure ou un rayon de courbure variable et dont les variations suivent une fonction déterminée.

Cette configuration avec un profil convexe permet d'aspirer le flux de gaz tout en le conservant laminaire du fait de l'effet Coanda.

Ceci permet d'évacuer un maximum de fumées vers la sortie 22 de gaz.

La géométrie de la sortie 22 permet de préférence d'aspirer le flux de gaz tangentiellement à la rampe aval 43, ce qui favorise encore l'absence de perturbations.

Comme également illustré, les rampes amont 41 et aval 43 sont encadrées par les faces extérieure, intérieure (en référence à l'enceinte 30), et inférieure de la paroi latérale 32 proximale à une rampe, permettant ainsi de contenir le flux respectivement entrant/sortant.

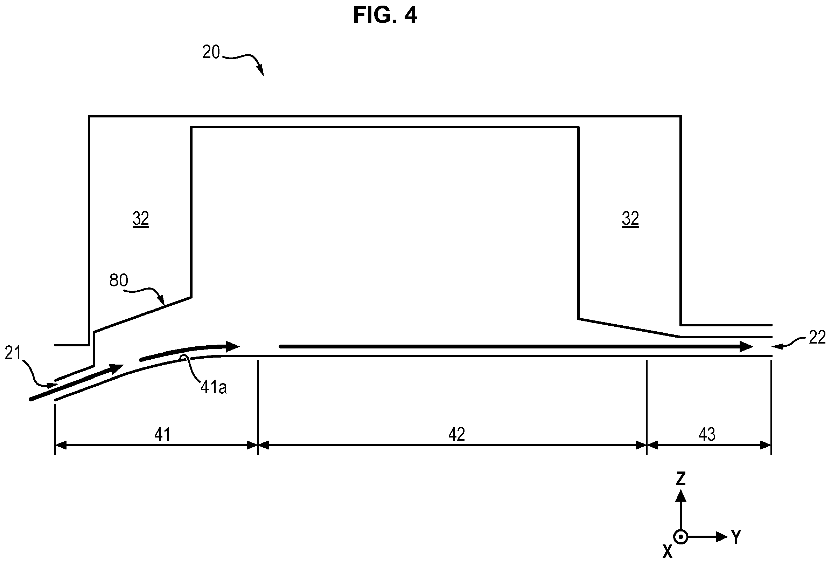

Selon un exemple possible non couvert par les revendications, ainsi que l'illustre la **figure 4****,** le plan de travail 40 peut ne pas comporter de rampe aval. Dans cet exemple en effet, la partie centrale 42 se prolonge par une zone aval 43 dont la surface est dans le même plan que la surface de la partie centrale 42. La sortie 22 aspire parallèlement à ce plan.

Le flux circule ainsi dans la continuité de la surface de la zone centrale 42, sans perturbation.

Comme également illustré, une portion de l'ouverture d'entrée 21 peut comprendre un dégagement 80 agencé dans la paroi latérale 32 de l'enceinte 30. Ce dégagement 80 permet d'agrandir la section de l'ouverture d'entrée 21 au-dessus de la rampe 41. Ledit dégagement 80 permet d'éviter l'adhérence du flux de gaz à la face inférieure et à la face intérieure de la paroi latérale 32 encadrant la rampe amont 41, préservant ainsi l'effet Coanda sur le flux de gaz entre ladite rampe amont 41 et le plan de travail 40.

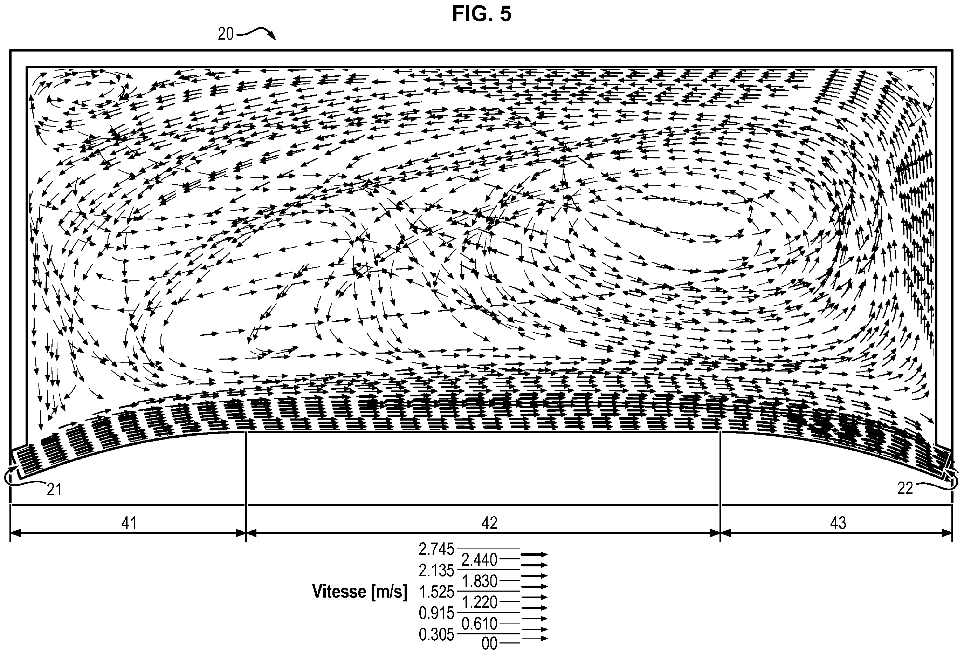

La **figure 5** illustre une simulation de l'écoulement du flux de gaz sur le plan de travail 40.

Comme on peut le voir sur cette figure, le flux de gaz reste laminaire au niveau de la rampe amont 41 et de la partie centrale 42 du plan de travail 40.

Il présente une vitesse relativement constante sur toute la longueur de la zone 42.

Comme également observé, il y a à proximité (de l'ordre de 1mm) du lit de poudre, une « couche limite », où la vitesse d'écoulement au niveau de la poudre est quasiment nulle. Également, la vitesse d'écoulement augmente rapidement avec l'altitude (à partir de quelques millimètres) pour atteindre la vitesse nominale du flux de gaz. De telles conditions sont idéales pour emmener un maximum de fumée sans dégrader le lit de poudre.

Par exemple, la vitesse du flux de gaz en circulation à proximité immédiate de la surface du plateau de fabrication est comprise entre environ 1,220 et environ 1,525 m/s.

Egalement, par exemple, la vitesse du flux de gaz en circulation à quelques millimètres de la surface du plateau de fabrication est comprise entre environ 1,525 et environ 2,135 m/s.

## Revendications

1. Chambre (20) de fabrication pour une machine (10) de fabrication additive, comprenant une enceinte (30) et comprenant dans cette enceinte (30) :
- un plan de travail (40) comprenant une zone centrale (42) comportant une surface plane,
- un plateau (50) de fabrication pour le dépôt des couches de matériau de fabrication additive et pour le support de la pièce en fabrication, ledit plateau (50) étant situé au niveau de la zone centrale (42) du plan de travail (40), ledit plateau étant déplacé en translation par rapport au plan de travail (40) au fur et à mesure du dépôt et de la fusion des couches de matériau de fabrication additive,
- un circuit pour la circulation d'un flux de gaz au-dessus du plateau (50) de fabrication,
**caractérisée en ce que** l'enceinte (30) et/ou le plan de travail (40) comporte une ouverture d'entrée du flux de gaz dont la géométrie assure l'injection du flux de gaz dans l'enceinte,
**en ce que** le plan de travail (40) comporte, en amont du plateau (50) de fabrication par rapport au sens de circulation du flux de gaz, une rampe amont (41) raccordée à la zone centrale (42) du plan de travail (40) où se trouve le plateau de fabrication par une surface présentant un profil convexe arrondi, ladite rampe amont (41) étant inclinée par rapport au plan du plateau (50) d'un angle compris entre 10° et 25°
**en ce que** ladite ouverture d'entrée dirige le flux de gaz sur ladite rampe amont,
et **en ce que** la surface à profil convexe arrondi est configurée pour plaquer par effet Coanda le flux de gaz au-dessus du plan de travail (40) le long de la zone centrale (42) du plan de travail (40), ledit flux de gaz circulant ainsi sous la forme d'un écoulement laminaire au-dessus du plateau (50) de fabrication,
l'enceinte (30) et/ou le plan de travail (40) comportant en outre en aval du plateau (50) une ouverture de sortie par laquelle le flux de gaz est aspiré, et
le plan de travail (40) comportant, en aval du plateau (50) de fabrication par rapport au sens de circulation du flux de gaz, une rampe aval (43) raccordée à la zone du plan de travail (40) où se trouve le plateau de fabrication par une surface présentant un profil convexe arrondi.

2. Chambre (20) de fabrication selon la revendication 1, **caractérisée en ce que** l'ouverture d'entrée est une fente qui s'étend selon une direction principale perpendiculaire à la direction de circulation du flux de gaz.

3. Chambre (20) de fabrication selon la revendication 2, dans laquelle la fente de l'ouverture d'entrée (21) s'étend sur au moins la largeur du plateau à l'intérieur de l'enceinte (30).

4. Chambre (20) de fabrication selon l'une des revendications précédentes, dans laquelle l'ouverture d'entrée (21) dirige le flux de gaz tangentiellement à la rampe amont (41).

5. Chambre (20) de fabrication selon l'une des revendications précédentes, dans laquelle une portion de l'ouverture d'entrée (21) comprend un dégagement (80) agencé dans la paroi latérale (32) de l'enceinte (30).

6. Chambre (20) de fabrication selon l'une des revendications précédentes, **caractérisée en ce que** la surface à profil convexe arrondi présente un rayon de courbure compris entre 300 mm et 1700 mm.

7. Chambre (20) de fabrication selon l'une des revendications précédentes, **caractérisée en ce que** la surface à profil convexe arrondi présente un rayon de courbure constant.

8. Chambre (20) de fabrication selon l'une des revendications 1 à 6, dans laquelle la surface à profil convexe arrondi présente différents rayons de courbure ou un rayon de courbure variable et dont les variations suivent une fonction déterminée.

9. Chambre (20) de fabrication selon l'une quelconque des revendications précédentes, **caractérisée en ce que** la rampe amont (41) est inclinée par rapport au plan du plateau (50) d'un angle compris entre 15° et 25°.

10. Chambre (20) de fabrication selon l'une quelconque des revendications précédentes, **caractérisée en ce que**, en aval du plateau (50) de fabrication, la surface du plan de travail (40) est parallèle à la surface du plateau de fabrication jusqu'à l'ouverture de sortie.

11. Chambre (20) de fabrication selon l'une quelconque des revendications précédentes, **caractérisée en ce que** l'ouverture de sortie est configurée pour aspirer le flux de gaz tangentiellement à ladite rampe aval (43).

12. Machine (10) de fabrication additive comprenant une chambre de fabrication (20) selon l'une des revendications précédentes.

## Patentansprüche

1. Fertigungskammer (20) für eine Maschine (10) zur generativen Fertigung, die einen Raum (30) beinhaltet und in diesem Raum (30) Folgendes beinhaltet:
- eine Arbeitsfläche (40), die eine zentrale Zone (42) beinhaltet, die eine ebene Oberfläche umfasst,
- eine Fertigungsplatte (50) für das Aufbringen der Schichten von Material zur generativen Fertigung und zum Stützen des sich in Fertigung befindlichen Teils, wobei sich die Platte (50) im Bereich der zentralen Zone (42) der Arbeitsfläche (40) befindet, wobei die Platte im Zuge des Aufbringens und des Schmelzens der Schichten von Material zur generativen Fertigung mit Bezug auf die Arbeitsfläche (40) translatorisch bewegt wird,
- einen Kreislauf für die Zirkulation eines Gasstroms oberhalb der Fertigungsplatte (50),
**dadurch gekennzeichnet, dass** der Raum (30) und/oder die Arbeitsfläche (40) eine Eintrittsöffnung für den Gasstrom umfasst, deren Geometrie die Einbringung des Gasstroms in den Raum gewährleistet,
dass die Arbeitsfläche (40) stromaufwärts der Fertigungsplatte (50) mit Bezug auf die Zirkulationsrichtung des Gasstroms eine stromaufwärtige Rampe (41) umfasst, die an die zentrale Zone (42) der Arbeitsfläche (40), in der sich die Fertigungsplatte befindet, durch eine Oberfläche angeschlossen ist, die ein abgerundetes konvexes Profil aufweist, wobei die stromaufwärtige Rampe (41) mit Bezug auf die Ebene der Platte (50) um einen Winkel zwischen 10° und 25° geneigt ist,
dass die Eintrittsöffnung den Gasstrom auf die stromaufwärtige Rampe leitet
und dass die Oberfläche mit abgerundetem konvexen Profil dazu konfiguriert ist, den Gasstrom durch den Coanda-Effekt oberhalb der Arbeitsfläche (40) entlang der zentralen Zone (42) der Arbeitsfläche (40) anzulegen,
wobei der Gasstrom auf diese Weise in Form einer laminaren Strömung oberhalb der Fertigungsplatte (50) zirkuliert,
wobei der Raum (30) und/oder die Arbeitsfläche (40) ferner stromabwärts der Platte (50) eine Austrittsöffnung umfasst, durch die der Gasstrom angesaugt wird, und
wobei die Arbeitsfläche (40) stromabwärts der Fertigungsplatte (50) mit Bezug auf die Zirkulationsrichtung des Gasstroms eine stromabwärtige Rampe (43) umfasst, die an die Zone der Arbeitsfläche (40), in der sich die Fertigungsplatte befindet, durch eine Oberfläche angeschlossen ist, die ein abgerundetes konvexes Profil aufweist.

2. Fertigungskammer (20) nach Anspruch 1, **dadurch gekennzeichnet, dass** die Eintrittsöffnung ein Spalt ist, der sich gemäß einer zu der Zirkulationsrichtung des Gasstroms senkrechten Hauptrichtung erstreckt.

3. Fertigungskammer (20) nach Anspruch 2, wobei sich der Spalt der Eintrittsöffnung (21) über mindestens die Breite der Platte im Inneren des Raumes (30) erstreckt.

4. Fertigungskammer (20) nach einem der vorhergehenden Ansprüche, wobei die Eintrittsöffnung (21) den Gasstrom tangential zu der stromaufwärtigen Rampe (41) leitet.

5. Fertigungskammer (20) nach einem der vorhergehenden Ansprüche, wobei ein Abschnitt der Eintrittsöffnung (21) eine Aussparung (80) beinhaltet, die in der Seitenwand (32) des Raumes (30) eingerichtet ist.

6. Fertigungskammer (20) nach einem der vorhergehenden Ansprüche, **dadurch gekennzeichnet, dass** die Oberfläche mit abgerundetem konvexen Profil einen Krümmungsradius zwischen 300 mm und 1700 mm aufweist.

7. Fertigungskammer (20) nach einem der vorhergehenden Ansprüche, **dadurch gekennzeichnet, dass** die Oberfläche mit abgerundetem konvexen Profil einen konstanten Krümmungsradius aufweist.

8. Fertigungskammer (20) nach einem der Ansprüche 1 bis 6, wobei die Oberfläche mit abgerundetem konvexen Profil unterschiedliche Krümmungsradien oder einen variablen Krümmungsradius, dessen Variationen einer bestimmten Funktion folgen, aufweist.

9. Fertigungskammer (20) nach einem beliebigen der vorhergehenden Ansprüche, **dadurch gekennzeichnet, dass** die stromaufwärtige Rampe (41) mit Bezug auf die Ebene der Platte (50) um einen Winkel zwischen 15° und 25° geneigt ist.

10. Fertigungskammer (20) nach einem beliebigen der vorhergehenden Ansprüche, **dadurch gekennzeichnet, dass** stromabwärts der Fertigungsplatte (50) die Oberfläche der Arbeitsfläche (40) bis zu der Austrittsöffnung parallel zu der Oberfläche der Fertigungsplatte ist.

11. Fertigungskammer (20) nach einem beliebigen der vorhergehenden Ansprüche, **dadurch gekennzeichnet, dass** die Austrittsöffnung dazu konfiguriert ist, den Gasstrom tangential zu der stromabwärtigen Rampe (43) anzusaugen.

12. Maschine (10) zur generativen Fertigung, die eine Fertigungskammer (20) nach einem der vorhergehenden Ansprüche beinhaltet.

## Claims

1. Manufacturing chamber (20) for an additive manufacturing machine (10), comprising an enclosure (30) and comprising, in this enclosure (30):
- a working plane (40) comprising a central area (42) having a flat surface,
- a manufacturing platform (50) for the deposition of the layers of additive manufacturing material and for supporting the part being manufactured, said platform being located in the central area (42) of the working plane (40), said platform being moved in translation with respect to the working plane (40) as the deposition and fusion of the layers of additive manufacturing powder proceed,
- a circuit for circulating a gas flow over the manufacturing platform (50), **characterized in that** the enclosure (30) and/or the working plane (40) comprises an inlet opening for the gas flow, the geometry of this opening enabling the gas flow to be injected into the enclosure,
**in that** the working plane (40) comprises, upstream of the manufacturing platform (50) with respect to the direction of circulation of the gas flow, an upstream ramp (41) connected to the central area (42) of the working plane (40) where the manufacturing platform is located by a surface having a rounded convex profile, said upstream ramp (41) being inclined with respect to the plane of the platform (50) at an angle of between 10° and 25°;
**in that** said inlet opening directs the gas flow onto said upstream ramp;
and **in that** the surface with a rounded convex profile is configured for attaching the gas flow, by the Coanda effect, above the working plane (40) along the central area (42) of the working plane (40), said gas flow thus circulating in the form of a laminar flow over said manufacturing platform (50),
the enclosure (30) and/or the working plane (40) also comprising, downstream of the platform (50), an outlet opening through which the gas flow is drawn,
and
the working plane (40) comprising, downstream of the manufacturing platform (50) with respect to the direction of circulation of the gas flow, a downstream ramp (43), connected to the area of the working plane (40) where the manufacturing platform is located by a surface having a rounded convex profile.

2. Manufacturing chamber (20) according to Claim 1, **characterized in that** the inlet opening is a slot extending along a main direction perpendicular to the direction of circulation of the gas flow.

3. Manufacturing chamber (20) according to Claim 2, wherein the slot of the inlet opening (21) extends over at least the width of the manufacturing platform inside the enclosure (30).

4. Manufacturing chamber (20) according to any of the preceding claims, wherein the inlet opening (21) directs the gas flow tangentially to the upstream ramp (41).

5. Manufacturing chamber (20) according to any of the preceding claims, wherein a portion of the inlet opening (21) comprises a cutout (80) arranged in the lateral wall (32) of the enclosure (30).

6. Manufacturing chamber (20) according to any of the preceding claims, **characterized in that** the surface with a rounded convex profile has a radius of curvature of between 300 mm and 1700 mm.

7. Manufacturing chamber (20) according to any of the preceding claims, **characterized in that** the surface with a rounded convex profile has a constant radius of curvature.

8. Manufacturing chamber (20) according to any of Claims 1 to 6, wherein the surface with a rounded convex profile has different radii of curvature or a variable radius of curvature, the variations of which conform to a specified function.

9. Manufacturing chamber (20) according to any of the preceding claims, **characterized in that** the upstream ramp (41) is inclined with respect to the plane of the platform (50) at an angle of between 15° and 25°.

10. Manufacturing chamber (20) according to any of the preceding claims, **characterized in that**, downstream of the manufacturing platform (50), the surface of the working plane (40) is parallel to the surface of the manufacturing platform as far as the outlet opening.

11. Manufacturing chamber (20) according to any of the preceding claims, **characterized in that** the outlet opening is configured for drawing the gas flow tangentially to said downstream ramp (43).

12. Additive manufacturing machine (10), comprising a manufacturing chamber (20) according to any of the preceding claims.
